## Europäisches Patentamt
## European Patent Office
## Office européen des brevets

(19)

(11) Numéro de publication: **0 072 327**
**B1**

(12)

# FASCICULE DE BREVET EUROPEEN

(45) Date de publication du fascicule du brevet:
**23.10.85**

(51) Int. Cl.⁴: **G 21 C 3/32**

(21) Numéro de dépôt: **82401488.0**

(22) Date de dépôt: **06.08.82**

(54) Assemblage combustible fissile pour réacteur nucléaire sous-modéré.

(30) Priorité: **06.08.81 FR 8115261**

(43) Date de publication de la demande:
**16.02.83 Bulletin 83/7**

(45) Mention de la délivrance du brevet:
**23.10.85 Bulletin 85/43**

(84) Etats contractants désignés:
**BE DE FR GB IT**

(56) Documents cités:
**FR - A - 1 509 232**
**FR - A - 2 141 559**
**FR - A - 2 146 976**
**GB - A - 1 497 053**
**US - A - 3 629 061**

(73) Titulaire: **FRAMATOME ET CIE., Tour Fiat 1, Place de la Coupole, F-92400 Courbevoie (FR)**

(72) Inventeur: **Millot, Jean-Paul, 1 allée des Roitelets, F-78310 Elancourt (FR)**
Inventeur: **Dejeux, Pol, 53/55 avenue de la Source, F-94130 Nogent-sur-Marne (FR)**
Inventeur: **Alibran, Patrice, 62 rue Amelot, F-75011 Paris (FR)**

(74) Mandataire: **Fort, Jacques et al, CABINET PLASSERAUD 84, rue d'Amsterdam, F-75009 Paris (FR)**

## Description

L'invention concerne un assemblage combustible fissile pour un réacteur nucléaire sous-modéré.

Un tel réacteur comporte un coeur constitué par des assemblages combustibles disposés côte à côte et de deux types différents. Les uns, appelés assemblages fissiles, renferment principalement un matériau fissile alors que les autres, appelés assemblages fertiles, renferment un matériau susceptible de se transformer en matériau fissile sous l'effet du bombardement neutronique. Les assemblages fertiles sont généralement disposés à la périphérie du coeur où ils recueillent le rayonnement neutronique produit par les assemblages fissiles.

Le coeur du réacteur baigne dans un fluide modérateur tel que de l'eau qui, généralement, sert également de fluide caloporteur. Ce fluide circule en contact avec les éléments combustibles disposés à l'intérieur des assemblages.

Par rapport aux réacteurs nucléaires à eau sous pression du type classique qui ne comportent que des assemblages fissiles, les réacteurs sous-modérés présentent un rapport volume de modérateur/volume du matériau fissile dans le coeur, ou rapport de modération VM/VU, très inférieur si bien que le spectre d'énergie des neutrons est très différent de ce qu'il est dans les réacteurs nucléaires à eau sous pression de type classique ou réacteur PWR.

Ce spectre est intermédiaire entre celui des réacteurs PWR où les neutrons sont très lents et celui des réacteurs rapides où les neutrons ne sont pas ralentis.

Le spectre d'énergie des neutrons dans les réacteurs sous-modérés est dit épithermique.

Un tel spectre de neutrons épithermique permet de produire de la matière fissile à partir de matière fertile disposée, par exemple, à la périphérie du coeur.

On obtient un rapport de modération faible dans les réacteurs dits sous-modérés, en prévoyant une répartition du matériau combustible dans les assemblages fissiles assurant à la fois un contact optimum avec le modérateur et un faible rapport volumique entre le modérateur et le matériau fissile.

Les assemblages combustibles, qu'ils soient fissiles ou fertiles, sont constitués par un boitier de forme prismatique en un matériau absorbant faiblement les neutrons, tel qu'un alliage de zirconium, à l'intérieur duquel des crayons de grande longueur renfermant le matériau fissile ou le matériau fertile sont disposés parallèlement à la hauteur du boitier et suivant un réseau régulier dans les sections droites de ce boitier. Les crayons de matériau combustible sont constitués par un tube en matériau de gainage rempli par des pastilles renfermant le matériau fissile ou fertile. Ces crayons disposés parallèlement les uns aux autres dans l'assemblage constituent un faisceau, l'écartement entre les crayons étant maintenu par des dispositifs d'espacement tels que des fils enroulés en torsades autour de la gaine des crayons, cette disposition permet la circulation du fluide caloporteur et modérateur en contact avec toute la surface du crayon, tout en autorisant un très faible espacement entre les crayons, c'est à dire l'obtention d'un réseau très dense dans lequel les gaines des crayons ne sont cependant jamais jointives. Un tel réseau à grande densité des crayons en matériau fissile permet d'obtenir un facteur de modération faible.

Cependant, les assemblages combustibles pour réacteurs nucléaires sous-modérés connus actuellement ne permettent pas d'assurer un taux de modération constant dans une section droite de l'assemblage. En particulier, au voisinage des zones périphériques des assemblages, le taux de modération varie considérablement.

Ceci peut entrainer une dégradation des performances des réacteurs sous-modérés.

Le but de l'invention est donc de proposer un assemblage combustible fissile pour un réacteur nucléaire sous-modéré comportant un coeur baignant dans un fluide modérateur, constitué par des assemblages combustibles disposés côte à côte, les uns renfermant principalement un matériau fissile et les autres un matériau fertile susceptible de se transformer en matériau fissile sous l'effet du bombardement neutronique, cependant que la répartition du matériau fissile dans les assemblages fissiles est choisie pour obtenir un rapport volumique faible entre le modérateur et le matériau fissile, chacun des assemblages du coeur étant constitué par un boitier prismatique en un matériau absorbant faiblement les neutrons à l'intérieur duquel des crayons de grande longueur renfermant le matériau fissile ou le matériau fertile sont disposés parallèlement à la hauteur du boitier suivant un réseau régulier dans les sections droites de ce boitier, cet assemblage permettant d'avoir un rapport de modération constant dans les sections droites de l'assemblage. Dans ce but sur chacune des faces latérales du boitier, est disposée au moins une pièce en un matériau fertile exposée aux neutrons émis par le matériau fissile de l'assemblage.

Afin de bien faire comprendre l'invention, on va maintenant décrire à titre d'exemple non limitatif, un mode de réalisation d'un assemblage combustible suivant l'invention, en se référant aux figures jointes en annexe.

La figure 1 représente de façon schématique une vue partielle d'un plan de section droite du coeur d'un réacteur nucléaire sous-modéré.

La figure 2 représente une vue agrandie du détail A de la figure 1.

La figure 3 représente une vue en perspective d'un assemblage combustible suivant l'invention.

La figure 4 représente une vue en perspective des différentes parties constitutives d'une paroi latérale de l'assemblage combustible représenté à la figure 3.

La figure 5 représente une vue en coupe longitudinale d'une paroi latérale.

La figure 7 représente une vue de dessus de la partie centrale de la paroi représentée à la figure 5.

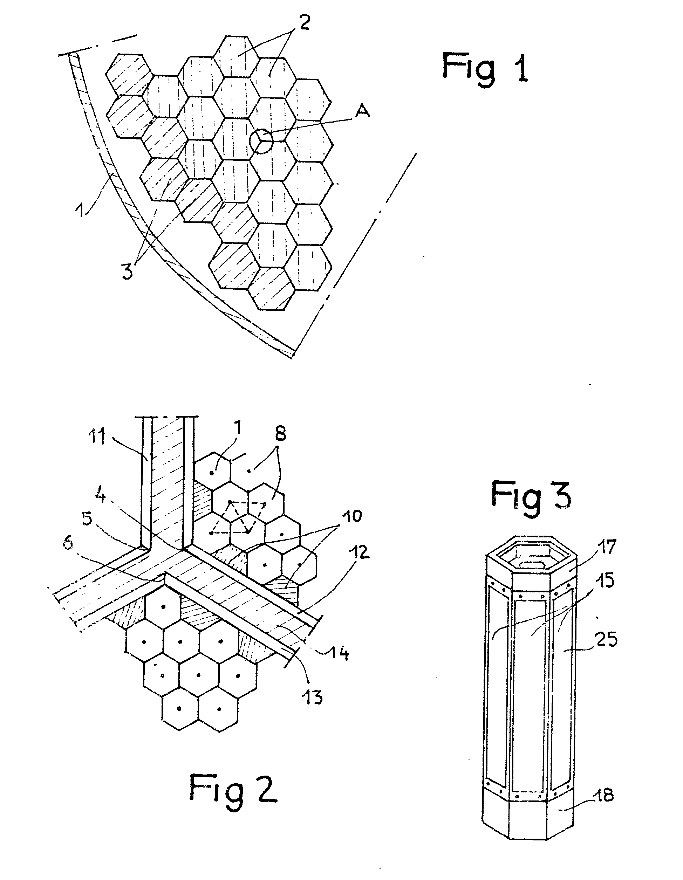

La figure 6 représente une coupe suivant un plan de section droite de l'assemblage combustible représenté à la figure 3.

Sur la figure 1, on voit une partie 1 de l'enveloppe cylindrique du coeur d'un réacteur nucléaire sous-modéré constitué par la juxtaposition d'assemblages combustibles fissiles 2 et d'assemblages combustibles fertiles 3. Les assemblages fertiles sont placés à la périphérie du coeur, au voisinage de l'enveloppe 1.

Chacun des assemblages a la forme d'un prisme droit à bases hexagonales. A l'intérieur du coeur, les assemblages sont disposés avec leurs faces latérales en vis à vis. Chacun des assemblages a une hauteur égale à la hauteur du coeur.

Sur la figure 2, on voit le détail A de la figure 1 à une échelle très agrandie montrant les portions de trois assemblages disposés au voisinage de trois arêtes 4, 5 et 6.

A l'intérieur de chacun des assemblages, les crayons combustibles 8 sont disposés suivant un réseau triangulaire. Pour simplifier, la section de chacun des crayons des assemblages a été assimilée à un hexagone.

On voit que le long des parois latérales des assemblages tels que 11 et 12, la répartition des crayons combustibles 8 suivant un réseau à mailles triangulaires ménage des espaces vides 10.

En outre, entre les parois latérales des assemblages combustibles disposés côte à côte, telles que les parois 12 et 13, il est nécessaire de maintenir un espace libre tel que 14, pour permettre la mise en place ou l'extraction des assemblages ainsi que les déformations possibles des boitiers pendant le fonctionnement du réacteur.

Entre les crayons combustibles 8, l'espace libre est très faible, l'écartement entre les crayons étant maintenu par un fil enroulé autour du gainage de ce crayon.

La totalité du coeur étant baignée par de l'eau servant de modérateur, le rapport entre le volume de modérateur et le volume de matériau fissile est faible à l'intérieur de l'assemblage.

En revanche, dans les zones périphériques des assemblages, au voisinage des parois latérales telles que 11, 12 et 13, le rapport volume de modérateur/volume de matériau fissile est beaucoup plus important, ce qui fait que le rapport de modération atteint des valeurs importantes dans ces zones et suffisante pour que les neutrons soient ralentis pour revenir dans leur zone thermique.

Ceci entraine une remontée locale du flux neutronique se traduisant par la création de pics de puissance.

On va maintenant se référer aux figures 3 à 7 pour décrire un assemblage combustible suivant l'invention.

Sur la figure 3, on voit le boitier d'un tel assemblage combustible de forme prismatique à base hexagonale.

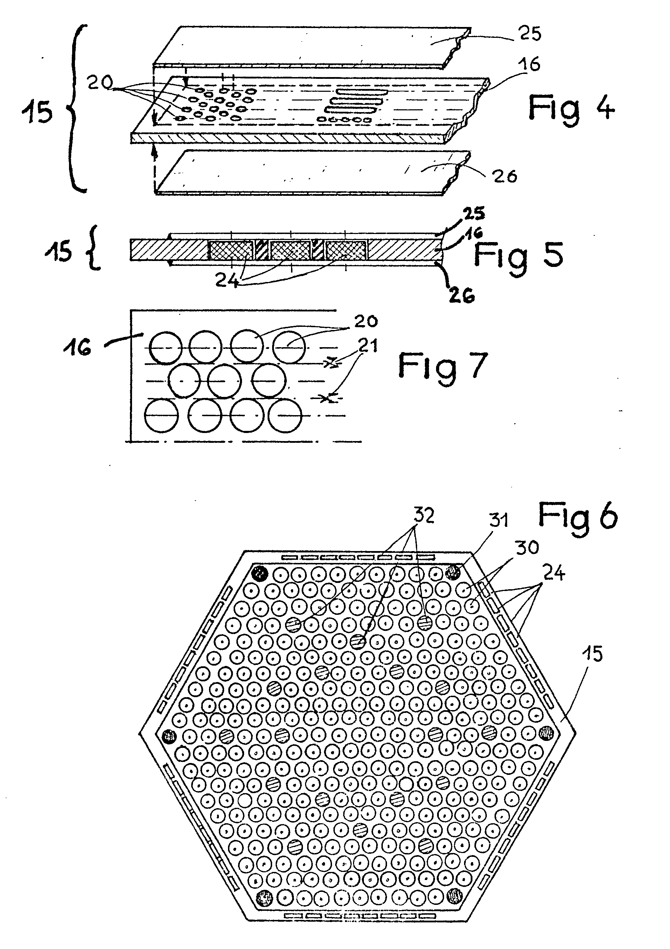

Ainsi qu'il est visible sur les figures 4 à 7; chacune des faces latérales 15 de ce boitier est constituée par une plaque centrale 16 en zirconium, d'une épaisseur de 4 mm. Cette plaque 16 comporte un grand nombre de perçages 20 débouchant sur chacune des faces de la plaque 16 et disposés suivant un réseau triangulaire visible sur la figure 7. Chacun de ces trous a un diamètre de 9,5 mm et le côté du triangle équilatéral constituant la maille du réseau a une longueur de 12 mm.

Sur la figure 7, on a également représenté les projections 21 des axes de deux crayons consécutifs de l'assemblage, sur la face latérale du boitier.

On voit que la position des axes des crayons correspond aux lignes de séparation entre les rangées de trous dans la plaque 16.

Ainsi qu'il est visible à la figure 5, ces trous sont remplis par des pastilles de matériau fertile 24, par exemple de l'oxyde d'uranium appauvri en uranium 235.

Ces pastilles 24 sont entièrement isolées du lieu extérieur par des plaques 25 et 26, en zirconium, de 0,5 mm d'épaisseur. Pour la fabrication de la paroi latérale du boitier, on introduit les pastilles combustibles en uranium appauvri dans chacun des trous ménagés dans la plaque 16 puis on fixe par soudure les plaques 25 et 26 sur chacune des faces de la plaque 16.

Les parois latérales 15 ainsi constituées sont alors assemblées par soudure le long de leurs arêtes pour constituer le boitier prismatique tel que représenté à la figure 3, puis assemblées aux fonds 17 et 18 du boitier.

Sur la figure 6, on voit la disposition des crayons combustibles fissiles dans un plan de section droite d'un assemblage fissile comportant un boitier formé de parois latérales 15 telles que celle qui a été décrite en se référant aux figures 4 à 7. On voit que les pastilles en bioxyde d'uranium appauvri 24 sont disposées dans les parois 15 au niveau des interstices entre deux crayons en matériau fissile 30 disposés les uns à côté des autres le long de la paroi 15.

Au voisinage des angles dièdres du boitier prismatique, les crayons combustibles fissiles 30 sont remplacés par des crayons fertiles 31 constitués par des pastilles de bioxyde d'uranium appauvri empilées dans des tubes de gainage.

Certaines des positions de crayons combustibles dans le réseau sont occupées par des tubes-guides 32 pour le guidage des barres de commande et la fixation des pièces de l'assemblage. Dans le cas de l'assemblage représenté à la figure 6, il y a 18 tubes-guides pour l'ensemble de l'assemblage.

Pour réaliser le montage d'un assemblage tel que représenté à la figure 6, on a introduit à l'intérieur d'un boitier fabriqué comme il a été décrit ci-dessus et fermé à sa partie inférieure par l'embout 18, les crayons combustibles fissiles 30 et les crayons fertiles 31 munis de leur dispositif d'espacement contitué par un enroulement de fils sur le tube de gainage, à l'intérieur du boitier les uns à côté des autres avec leur dispositif d'espacement jointif.

Ces crayons combustibles se disposent alors à l'intérieur du boitier comme représentés à la figure 6.

Les tubes-guides 32 sont introduits à la place de crayons fissiles à certains endroits, dans le réseau.

Le fond inférieur 18 du boitier comporte des ouvertures reproduisant ce réseau, si bien que les tubes-guides de longueur supérieure à celle des crayons se mettent en place dans ces ouvertures.

Le fond supérieur 17 qui comporte de même des ouvertures suivant une disposition conforme au réseau représenté à la figure 6 est alors mis en place de façon que les extrémités des crayons s'engagent dans les ouvertures correspondantes de ce fond. On voit que les principaux avantages de l'assemblage combustible fissile suivant l'invention sont d'éviter l'apparition de puissance neutronique élevée au voisinage des parois de l'assemblage, en évitant un effet de modération trop important dans ces zones et d'augmenter la quantité de matériau fertile et donc la quantité de matériau fissile régénéré par la réaction neutronique, sans modifier la forme extérieure de la structure de l'assemblage.

Le flux natronique au voisinage des parois de l'assemblage est en effet fortement diminué, puisque les neutrons émis par les crayons combustibles fissiles sont absorbés par les pastilles de matériau fertile inclus dans les parois latérales du boitier avant d'avoir connu un effet de modération dans la gamme thermique.

L'invention ne se limite pas au mode de réalisation qui vient d'être décrit, elle en comporte au contraire toutes les variantes.

C'est ainsi que le matériau fertile incorporé aux parois du boitier de l'assemblage peut être introduit sous forme de pastilles à section circulaire dans des ouvertures non plus circulaires mais oblongues ménagées dans la plaque centrale de la paroi, que ces pièces en matériau fertile peuvent avoir une forme différente de la forme circulaire, qu'elles peuvent prendre par exemple, la forme de plaquettes rectangulaires de dimensions plus ou moins importantes, leur taille pouvant même aller jusqu'à une taille équivalente à celle des plaques de fermeture 25 et 26. Dans ce dernier cas, on peut utiliser bien évidemment une seule plaque de matériau fertile incorporée à la paroi du boitier.

Les parois latérales du boitier peuvent avoir une structure tout à fait différente de celle qui a été représentée, cependant, il est préférable d'isoler le matériau fertile du fluide modérateur pour éviter sa corrosion. Il est de même souhaitable que ce matériau fertile soit isolé totalement du milieu extérieur, pour éviter toute fuite de gaz de fission.

La disposition des pastilles de matériau fertile telles que décrites permet une absorption optimale du flux neutronique dans le cas d'une disposition de crayons comme représentée à la figure 6. Cependant, il est possible d'imaginer d'autres dispositions, en fonction de la répartition du flux neutronique autour de l'assemblage.

On a décrit un boitier où les parois latérales étaient assemblées par soudage suivant leurs arêtes, mais il est également possible d'imaginer un assemblage mécanique des parois latérales du boitier, permettant un démontage ultérieur, par exemple lors de la réfection des assemblages combustibles usagés.

On peut également imaginer l'utilisation d'un matériau fertile différent du bioxyde d'uranium appauvri.

Enfin, l'invention s'applique non seulement dans le cas des assemblages prismatiques à section hexagonale tels que décrits, mais également dans tous les cas où l'on utilise des assemblages constitués par un boitier rempli par des crayons combustibles fissiles, dans un réacteur nucléaire sous-modéré.

**Revendications**

1. Assemblage combustible fissile pour un réacteur nucléaire sous-modéré comportant un coeur baignant dans un fluide modérateur, constitué par des assemblages combustibles disposés côte à côte, les uns renfermant principalement un matériau fissile (2) et les autres un matériau fertile (3) susceptible de se transformer en matériau fissile sous l'effet du bombardement neutronique, cependant que la répartition du matériau fissile dans les assemblages est choisie pour obtenir un rapport volumique faible entre le modérateur et le matériau fissile, chacun des assemblages du coeur étant constitué par un boitier prismatique en un matériau absorbant faiblement les neutrons, à l'intérieur duquel des crayons (30, 31) de grande longueur renfermant le matériau fissile (30) ou le matériau fertile (31) sont disposés parallèlement à la hauteur du boitier et suivant un réseau régulier dans les sections droites de ce boitier, caractérisé par le fait que sur chacune des faces latérales (15) du boitier, est disposée au moins une pièce (24) en un matériau fertile exposée aux neutrons émis par le matériau fissile de l'assemblage.

2. Assemblage combustible fissile suivant la revendication 1, caractérisé par le fait que le matériau fertile est sous forme de pastilles unitaires (24) incorporées à la paroi (15) du boitier, dans son épaisseur, suivant une disposition régulière dépendant de la disposition des crayons fissiles (30) dans l'assemblage.

3. Assemblage combustible suivant la revendication 2, caractérisé par le fait que la paroi est constituée par une plaque centrale (16) en matériau absorbant faiblement les neutrons, percée de trous (20) dont la dimension correspond à la dimension des pastilles unitaires de matériau fertile (24) et renfermant une pastille fertile dans chacun de ces trous (20) et par deux plaques (25, 26) de plus faible épaisseur que la plaque centrale (16), en matériau absorbant faiblement les neutrons, fixées par soudure sur chacune des faces de la plaque centrale (16) et isolant les pastilles de combustible fertiles (24) du milieu extérieur.

4. Assemblage combustible fissile suivant la revendication 3, caractérisé par le fait que les pastilles fertiles (24) sont disposées dans des trous (20) de la plaque centrale (16) formant un réseau triangulaire régulier sur cette plaque (16).

5. Assemblage combustible fissile suivant la revendication 1, caractérisé par le fait que la pièce en matériau fertile est constituée par une plaque plane unique incorporée à la paroi latérale (15) du boitier des assemblages.

6. Assemblage combustible fissile suivant l'une quelconque des revendications 1, 2, 3, 4 et 5, caractérisé par le fait que les crayons combustibles (31) disposés au voisinage des arêtes du boitier prismatique sont des crayons combustibles fertiles.

7. Assemblage combustible fissile suivant l'une quelconque des revendications 1, 2, 3, 4, 5 et 6, caractérisé par le fait que le matériau fertile est du bioxyde d'uranium appauvri.

8. Assemblage combustible fissile suivant l'une quelconque des revendications 1, 2, 3, 4, 5, 6 et 7, dans le cas où cet assemblage a une section transversale hexagonale à l'intérieur de laquelle les crayons combustibles (30, 31) sont disposés suivant un réseau à mailles triangulaires équilatérales, caractérisé par le fait que les six faces latérales (15) du boitier comportent des pièces (24) en matériau fertile dans les zones de ces parois (15) situées au voisinage des espaces vides de matière fissile situés entre deux crayons successifs voisins de la paroi (15).

**Patentansprüche**

1. Brennstoffelementbündel mit spaltbarem Material für einen untermoderierten Kernreaktor mit einem in einem Moderator eingetauchten Kern bestehend aus nebeneinander angeordneten Brennstoffelementbündeln, bei denen die einen hauptsächlich Spaltstoff (2) und die anderen Brutstoff (3) enthalten, der sich durch Neutronenbeschuß in Spaltstoff umsetzen läßt, während die Aufteilung des Spaltstoffes in den Brennstoffelementbündeln so gewählt wird, daß ein geringes Volumenverhältnis zwischen dem Moderator und dem Spaltstoff erzielt wird, wobei jedes Brennstoffelementbündel des Kerns ein Prismengehäuse aus Schwach-Neutronenabsorbermaterial umfaßt, in welchem sehr lange mit Spaltstoff (30) oder Brutstoff (31) gefüllte Brennstoffelementstäbe (30, 31) in dem Bereich des Gehäuses parallel nebeneinander und gemäß einem regelmäßigen Gitter in den geraden Zonen dieses Gehäuses angeordnet sind, dadurch gekennzeichnet, daß mindestens ein Teil (24) aus Brutstoff, der durch den Spaltstoff des Brennstoffelementbündels ausgestrahlten Neutronen bestrahlt wird, auf jeder Seitenfläche (15) des Gehäuses angeordnet ist.

2. Brennstoffelementbündel mit spaltbarem Material nach Anspruch 1, dadurch gekennzeichnet, daß der Brutstoff als einzelne Brennstofftabletten (24) im Innern der Gehäusewand (15) gemäß einer regelmäßigen Anordnung eingelassen ist, die von der Anordnung der Spaltstoffstäbe (30) in dem Brennstoffelementbündel abhängt.

3. Brennstoffelementbündel nach Anspruch 2, dadurch gekennzeichnet, daß die Wand eine mittige Platte (16) aus Schwach-Neutronenabsorbermaterial mit Bohrungen (20) umfaßt, deren Abmessung der Dimension der einzelnen Brutstofftabletten (24) entspricht und die in jeder dieser Öffnungen (20) eine Brutstofftablette enthalten, sowie zwei aus Schwach-Neutronenabsorbermaterial bestehende in der Wandstärke dünnere Platten (25, 26) als die mittige Platte (16), die an die jeweiligen Flächen der mittigen Platte (16) angeschweißt sind und die Brutstofftabletten (24) von der Außenumgebung isolieren.

4. Brennstoffelementbündel mit spaltbarem Material nach Anspruch 3, dadurch gekennzeichnet, daß die Brutstofftabletten (24) in den Bohrungen (20) der mittigen Platte (16) als regelmäßiges Dreieckgitter in dieser Platte (16) angeordnet sind.

5. Brennstoffelementbündel mit spaltbarem Material nach Anspruch 1, dadurch gekennzeichnet, daß das Teil aus Brutstoff eine einzige in der Gehäuseseitenwand (15) der Brennstoffelementbündel eingebaute flache Platte umfaßt.

6. Brennstoffelementbündel mit spaltbarem Material nach einem der Ansprüche 1, 2, 3, 4 und 5, dadurch gekennzeichnet, daß die in der Nähe der Kanten des Prismengehäuses angeordneten Brennstoffstäbe (31) Brutstoffstäbe sind.

7. Brennstoffelementbündel mit spaltbarem Material nach einem der Ansprüche 1, 2, 3, 4, 5 und 6, dadurch gekennzeichnet, daß der Brutstoff abgereichertes Urandioxid ist.

8. Brennstoffelementbündel mit spaltbarem Material nach einem der Ansprüche 1, 2, 3, 4, 5, 6 und 7, wenn dieses Brennstoffelementbündel einen Sechskantquerschnitt aufweist, in welchem die Brennstoffstäbe (30, 31) gemäß einem Gitter mit gleichseitigen Dreieckmaschen angeordnet sind, dadurch gekennzeichnet, daß die sechs Gehäuse-Seitenflächen (15) in den Zonen dieser Wände (15), die sich in der Nähe der Spaltstoff-Leerräume befinden, die zwischen zwei folgenden der Wand (15) benachbarten Brennstoffstäbe liegen, Teile (24) aus Brutstoff aufweisen.

**Claims**

1. Fissile fuel assembly for an under-moderated nuclear reactor incorporating a core immersed in a moderator fluid, consisting of fuel assemblies arranged side by side, some chiefly containing a fissile material (2) and others a fertile material (23) capable of being converted into fissile material under the effect of neutron bombardment, while the distribution of the fissile material in the assemblies is chosen to obtain a low volume ratio of the moderator to the fissile material, each of the core assemblies consisting of a prismatic casing made of a weakly neutron-absorbing material, inside which long rods (30, 31) containing the fissile material (30) or the fertile material (31) are arranged in parallel, level with the casing, and according to a uniform lattice in the cross-sections of this casing, characterised in that on each of the side faces (15) of the casing is arranged at least one part (24) made of a fertile material and exposed to the neutrons emitted by the fissile material of the assembly.

2. Fissile fuel assembly according to Claim 1, characterised in that the fertile material is in the form of unit pellets (24) incorporated in the wall (15) of the casing, within its thickness, according to a uniform arrangement depending on the arrangement of the fissile rods (30) in the assembly.

3. Fuel assembly according to Claim 2, characterised in that the wall consists of a central plate (16) made of weakly neutron-absorbing material, pierced with holes (20) the size of which corresponds to the size of the unit pellets of fertile material (24) and enclosing a fertile pellet in each of these holes (20) and of two plates (25, 26) which are thinner than the central plate (16), made of a weakly neutron-absorbing material, and fixed by welding to each of the faces of the central plate (16) and insulating the fertile fuel pellets (24) from the external surroundings.

4. Fissile fuel assembly according to Claim 3, characterised in that the fertile pellets (24) are arranged in holes (20) in the central plate (16) forming a uniform triangular lattice on this plate (16).

5. Fissile fuel assembly according to Claim 1, characterised in that the part made of fertile material consists of a single plane plate incorporated in the side wall (15) of the casing of the assemblies.

6. Fissile fuel assembly according to any one of Claims 1, 2, 3, 4 and 5, characterised in that the fuel rods (31) arranged near the edges of the prismatic casing are fertile fuel rods.

7. Fissile fuel assembly according to any one of Claims 1, 2, 3, 4, 5 and 6, characterised in that the fertile material is depleted uranium dioxide.

8. Fissile fuel assembly according to any one of Claims 1, 2, 3, 4, 5, 6 and 7, in the case where this assembly has a hexagonal transverse section within which the fuel rods (30, 31) are arranged according to a lattice having equilateral triangular meshes, characterised in that the six side faces (15) of the casing incorporate parts (24) made of fertile material in the zones of these walls (15) which are situated near the spaces which are empty of fissile material and situated between two successive rods adjoining the wall (15).

1/2

Fig 1

Fig 2

Fig 3

Fig 4

Fig 5

Fig 7

Fig 6